# EUROPÄISCHE PATENTANMELDUNG

(11) **EP 1 075 980 A1**
(43) Veröffentlichungstag der Anmeldung: **14.02.2001**
(21) Anmeldenummer: 00117441.6
(22) Anmeldetag: 11.08.2000
(51) Int. Cl.: B60L 5/19, B60L 5/28

(54) **Stromabnehmer für ein Schienenfahrzeug**

(30) Priorität: 12.08.1999 DE 19938071
(71) Anmelder: SIEMENS AKTIENGESELLSCHAFT, 80333 München (DE); HYDAC Technology GmbH, 66280 Sulzbach/Saar (DE)
(72) Erfinder: Düll, Hans-Jürgen, Dipl.-Ing., 91094 Langensendelbach (DE); Hahmann, Wolfgang, Dr., 47906 Kempen (DE); Lichtenstein, Lother, Dipl.-Ing., 91058 Erlangen (DE)
(74) Vertreter: Zedlitz, Peter, Dipl.-Inf.

(57) **Zusammenfassung**

Schienenfahrzeug mit wenigstens einem Wagenkasten (1), auf dessen Dach (2) wenigstens ein Stromabnehmer (3) mit seinem Träger (4) elektrisch isoliert und vom Dach (2) des Wagenkastens (1) beabstandet angeordnet ist, wobei der Träger (4) des Stromabnehmers (3) durch eine Stellvorrichtung (6) in seinem Höhenabstand zum Dach (2) des Wagenkastens (1) derart einstellbar ist, daß bei einem in Ruhelage abgesenkten und elektrisch spannungslosen Stromabnehmer (3) der Höhenabstand (H_{RL}) zwischen dem tiefsten unter elektrischer Spannung stehenden Teil (4) des Stromabnehmers (3) und dem Dach (2) um einen vorgebbaren Differenzwert kleiner ist als die Mindestluftstrecke (L), und daß bei einem in Betriebslage angehobenen und unter elektrischer Spannung stehenden Stromabnehmer (3) der Höhenabstand (H_{BL}) zwischen dem tiefsten unter elektrischer Spannung stehenden Teil (4) des Stromabnehmers (3) und dem Dach (2) zumindest der Mindestluftstrecke (L) entspricht.

## Beschreibung

Die Erfindung betrifft ein Schienenfahrzeug mit wenigstens einem Wagenkasten, auf dessen Dach wenigstens ein Stromabnehmer mit seinem Träger elektrisch isoliert und vom Dach des Wagenkastens beabstandet angeordnet ist, wobei wenigstens ein Stromabnehmer in eine Betriebslage anhebbar und in eine Ruhelage absenkbar ist.

Derartige Schienenfahrzeuge weisen, falls sie als Mehrsystemfahrzeuge ausgeführt sind, für die verschiedenen Systeme jeweils wenigstens einen Stromabnehmer auf. Damit ist zumindest ein Teil der Stromabnehmer auf den Dächern von Wagenkästen angeordnet, die als Fahrgasträume dienen. Das gleiche gilt für Schienenfahrzeuge, die als Triebzüge ausgeführt sind, und damit keine für Fahrgäste unzugänglichen Triebköpfe aufweisen.

Um einerseits das Lichtraumprofil der zu befahrenden Strecke nicht zu verletzen und um andererseits bei dem tiefsten unter elektrischer Spannung stehenden Teil des Stromabnehmers eine Mindestluftstrecke zum Dach des Wagenkastens einzuhalten, ist das Dach des Wagenkastens im Bereich des Stromabnehmers gegenüber dem verbleibenden Bereich des Daches in der Regel abgesenkt.

Die Absenkung des Daches führt zu einer reduzierten Innenraumhöhe. Um die Reduzierung der Innenraumhöhe möglichst gering zu halten, wird meistens außerdem die Dachhöhe verringert, die u.a. die Torsionssteifigkeit des Wagenkastens bestimmt.

Aufgabe der vorliegenden Erfindung ist es, ein Schienenfahrzeug der eingangs genannten Art zu schaffen, das einerseits hinsichtlich der konstruktiven Gestaltung des Wagenkastens keinen Einschränkungen unterliegt und das andererseits das Lichtraumprofil der zu befahrenden Strecken nicht verletzt.

Die Aufgabe wird bei einem Schienenfahrzeug gemäß Oberbegriff des Anspruchs 1 erfindungsgemäß durch die Merkmale im kennzeichnenden Teil dieses Anspruchs gelöst. Vorteilhafte Ausgestaltungen der Erfindung sind jeweils Gegenstand von weiteren Ansprüchen.

Das Schienenfahrzeug gemäß Anspruch 1 umfaßt wenigstens einen Wagenkasten, auf dessen Dach wenigstens ein Stromabnehmer mit seinem Träger elektrisch isoliert und vorn Dach des Wagenkastens beabstandet angeordnet ist, wobei wenigstens ein Stromabnehmer in eine Betriebslage anhebbar und in eine Ruhelage absenkbar ist. Erfindungsgemäß ist der Träger des Stromabnehmers durch eine Stellvorrichtung in seinem Höhenabstand zum Dach des Wagenkastens derart einstellbar, daß bei einem in Ruhelage abgesenkten und elektrisch spannungslosen Stromabnehmer der Höhenabstand zwischen dem tiefsten unter elektrischer Spannung stehenden Teil des Stromabnehmers und dem Dach um einen vorgebbaren Differenzwert kleiner ist als die Mindestluftstrecke, und daß bei einem in Betriebslage angehobenen und unter elektrischer Spannung stehenden Stromabnehmer der Höhenabstand zwischen dem tiefsten unter elektrischer Spannung stehenden Teil des Stromabnehmers und dem Dach zumindest der Mindestluftstrecke entspricht.

Bei dem Schienenfahrzeug gemäß Anspruch 1 ist der jeweilige Sicherheitsabstand des Stromabnehmers zum Dach des Wagenkastens den jeweiligen Betriebsfällen anpaßbar. Ist der Stromabnehmer in seine Ruhelage abgesenkt und elektrisch spannungslos geschaltet, dann ist der Höhenabstand zwischen dem Träger des Stromabnehmers und dem Dach des Wagenkastens um einen vorgebbaren Differenzgrenzwert kleiner als die Mindestluftstrecke. Ist der Stromabnehmer jedoch in seine Betriebslage angehoben, dann entspricht der Höhenabstand zwischen dem Träger des Stromabnehmers und dem Dach des Wagenkastens zumindest der Mindestluftstrecke. Der Stromabnehmer kann dann gefahrlos an die elektrische Spannung (Fahrdrahtspannung) geschaltet werden.

Da die Arbeitshöhe des Stromabnehmers einstellbar ist, wird die maximal mögliche Wagenkastenhöhe unter dem Stromabnehmer durch die Ruhelage des Stromabnehmers bestimmt. Bei Schienenfahrzeugen, bei denen der Stromabnehmer entgegen der Neigung des Wagenkastens rückführbar ist, ist zusätzlich zur Ruhelage des Stromabnehmers noch seine Schwenklage zu berücksichtigen.

Das Absenken des Trägers des Stromabnehmers auf einen Abstand zum Dach des Wagenkastens, der kleiner ist als die Mindestluftstrecke, ist zulässig, da die Mindestluftstrecke nur bei einem unter Spannung stehenden Stromabnehmer eingehalten werden muß.

Dadurch, daß der Abstand zum Dach des Wagenkastens in Abhängigkeit vom Betriebsfall (Ruhelage, Betriebslage) veränderbar ist, erhält man aus der Höhendifferenz zwischen Ruhelage und Betriebslage einen Zuwachs an Dachhöhe, die zu einer entsprechend vergrößerten Innenraumhöhe des Wagenkastens führt.

Falls das Schienenfahrzeug einen neigbaren Wagenkasten aufweist, muß der Stromabnehmer entgegen der Neigung des Wagenkastens zurückgeführt werden. In diesem Fall ist es besonders vorteilhaft, das Schienenfahrzeug gemäß Anspruch 2 oder 3 auszubilden.

Im Rahmen der Erfindung kann die Stellvorrichtung als elektro-mechanische Steilvorrichtung (Anspruch 4) oder als elektro-pneumatische Stellvorrichtung (Anspruch 5) ausgebildet sein. Weiterhin kann die Stellvorrichtung als elektro-hydraulische Stellvorrichtung (Anspruch 6) oder als elektro-pneumatisch-hydraulische Stellvorrichtung(Anspruch 7) ausgebildet sein.

Nachfolgend werden Ausführungsbeispiele der Erfindung anhand der Zeichnung näher erläutert. Es zeigen:
- FIG 1: einen Querschnitt einer ersten Ausführungsform des erfindungsgemäßen Schienenfahrzeugs im Bereich des Daches, wobei der Stromabnehmer in seine Ruhelage abgesenkt ist,
- FIG 2: das Schienenfahrzeug gemäß FIG 1, wobei der Stromabnehmer in seine Betriebslage angehoben ist,
- FIG 3: eine Draufsicht auf den Stromabnehmer des Schienenfahrzeugs gemäß FIG 1 und 2,
- FIG 4: eine hydraulische Stellvorrichtung für einen Stromabnehmer.

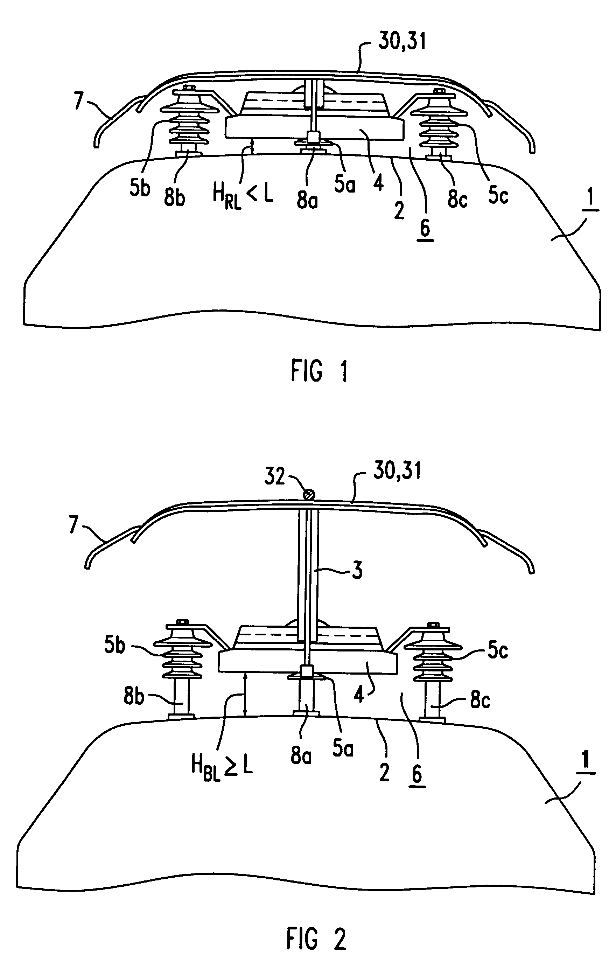

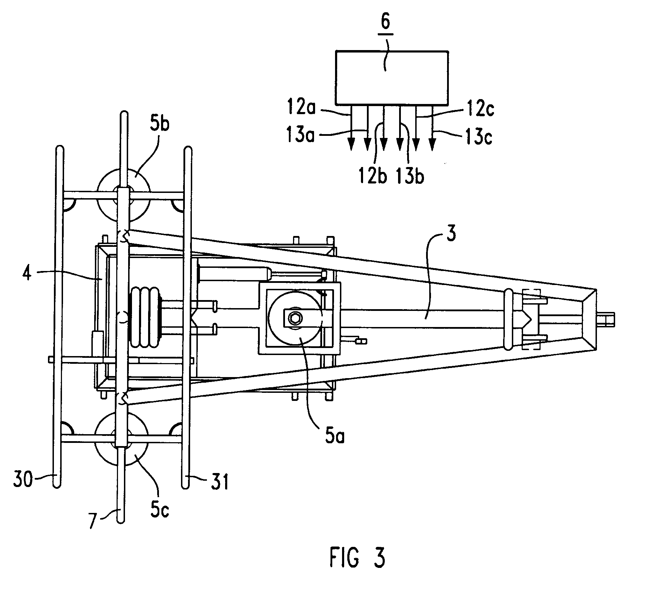

In den FIG 1 und 2 ist mit 1 ein Wagenkasten eines Schienenfahrzeugs bezeichnet, auf dessen Dach 2 ein Stromabnehmer 3 mit seinem Träger 4 angeordnet ist. Der Träger 4, der im gezeigten Ausführungsbeispiel das tiefste unter elektrischer Spannung stehende Teil darstellt, ist über drei Stützisolatoren 5a, 5b und 5c (s. FIG 3) elektrisch isoliert und vom Dach 2 des Wagenkastens 1 beabstandet angeordnet.

Der Stromabnehmer 3 ist in eine Ruhelage absenkbar (FIG 1) und in eine Betriebslage anhebbar (FIG 2).

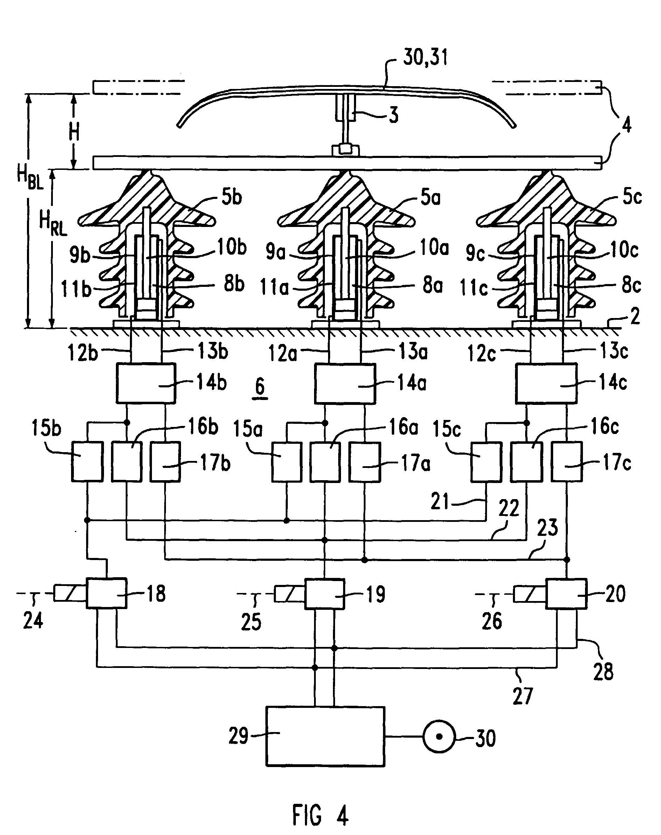

Das erfindungsgemäße Schienenfahrzeug weist eine Stellvorrichtung 6 auf, durch die der Träger 4 des Stromabnehmers 3 in seinem Höhenabstand zum Dach 2 des Wagenkastens 1 einstellbar ist. Bei dem in den FIG 1 und 2 dargestellten Ausführungsbeispiel ist die Steilvorrichtung 6 als Hubvorrichtung ausgebildet und umfaßt für jeden Stützisolator 5a, 5b und 5c jeweils einen Hydraulikzylinder 8a, 8b und 8c (s. FIG 4). Die Hydraulikzylinder 8a, 8b und 8c sind in den Stützisolatoren 5a, 5b und 5c integriert.

In FIG 1 ist der Stromabnehmer 3 in seine Ruhelage abgesenkt und elektrisch spannungslos. Der Höhenabstand H_{RL} des Trägers 4 zum Dach 2 des Wagenkastens 1 ist damit um einen vorgebbaren Differenzwert kleiner als die Mindestluftstrecke L.

Wird der Stromabnehmer 3 in seine Betriebslage angehoben und steht unter elektrischer Spannung, dann entspricht der Höhenabstand H_{BL} des Trägers 4 zum Dach 2 des Wagenkastens 1 zumindest der Mindestluftstrecke L. Der Stromabnehmer 3 kann dann gefahrlos an die elektrische Spannung geschaltet werden. Die Schleifleisten 30 und 31 des Stromabnehmers 3 (s. FIG 4) liegen hierzu am Fahrdraht 32 an (s. FIG 2).

Das Absenken des Trägers 4 auf einen Höhenabstand H_{RL}, der kleiner ist als die Mindestluftstrecke L, ist zulässig, da die Mindestluftstrecke L nur bei einem unter Spannung stehenden Stromabnehmer 3 eingehalten werden muß.

Dadurch, daß der Höhenabstand zum Dach 2 des Wagenkastens 1 in Abhängigkeit vom Betriebsfall (Ruhelage, Betriebslage) um einen Hub h veränderbar ist(s. FIG 4, in der die angehobene Position des Träges 4 gestrichelt dargestellt ist), erhält man aus der Höhendifferenz zwischen dem Höhenabstand H_{RL} bei Ruhelage und dem Höhenabstand H_{BL} bei Betriebslage einen Zuwachs an Dachhöhe, die zu einer entsprechend vergrößerten Innenraumhöhe des Wagenkastens führt.

Falls der Stromabnehmer 3 ein teleskopartiges Scheitelrohr 7 besitzt, kann dieses zur weiteren Absenkung des Stromabnehmers 3 bzw. zur Reduzierung der Windgeräusche verkürzt am Dach 2 des Wagenkastens 1 anliegen.

Die in FIG 4 dargestellte hydraulische Steilvorrichtung 6 umfaßt für jeden der drei Stützisolatoren 5a, 5b und 5c, auf denen sich der Träger 4 des Stromabnehmers 3 auf dem Dach 2 des Wagenkastens 1 abstützt (s. FIG 4) jeweils einen hydraulischen Stellantrieb 8a bzw. 8b bzw. 8c. Die hydraulischen Stellantriebe 8a bzw. 8b bzw. 8c sind in den Stützisolatoren 5a, 5b und 5c integriert. Die hydraulischen Stellantriebe 8a, 8b und 8c bestehen jeweils aus einem Hydraulikzylinder 9a bzw. 9b bzw. 9c schlanker Bauform, dessen Kolbenstange 10a bzw. 10b bzw. 10c mit dem Stützisolator 5a bzw. 5b bzw. 5c verbunden ist. Der hydraulische Stellantrieb 8a bzw. 8b bzw. 8c ist mit dem Boden seines Gehäuses 11a bzw. 11b bzw. 11c auf dem Dach 2 des Wagenkastens 1 befestigt. Durch Befühlen der Hydraulikzylinder 10a, 10b und 10c über ihre jeweilige bodenseitige Einlaßöffnung durch eine Hydraulikleitung 12a bzw. 12b bzw. 12c werden die Kolbenstangen 10a, 10b und 10c ausgefahren (Hubvolumen der Hydraulikzylinder 9a, 9b und 9c steigt) und damit der Träger 4 des Stromabnehmers 3 angehoben. Durch Befüllen der Hydraulikzylinder 9a, 9b und 9c über die kolbenstangenseitige Einlaßöffnung durch eine Hydraulikleitung 13a bzw. 13b bzw. 13c werden die Hydraulikzylinder 9a, 9b und 9c eingefahren (Hubvolumen der Hydraulikzylinder 9a, 9b und 9c sinkt) und damit der Träger 4 des Stromabnehmers 3 abgesenkt.

Zur Abdämpfung der beim Erreichen der oberen bzw. der unteren Endlage vorhandenen kinetischen Energie können die Hydraulikzylinder 9a, 9b und 9c mit Endlagendämpfungen ausgestattet sein.

Die Hydraulikleitungen 12a und 13a verbinden den Hydraulikzylinder 9a mit einer Blockiervorrichtung 14a und die Hydraulikleitungen 12b und 13b verbinden den Hydraulikzylinder 9b mit einer Blockiervorrichtung 14b. Weiterhin verbinden die Hydraulikleitungen 12c und 13c den Hydraulikzylinder 9c mit einer Blockiervorrichtung 14c. Die Blockiervorrichtungen 14a, 14b und 14c verhindern ein willkürliches Absinken des Trägers 4 des Stromabnehmers 3. Die Blockiervorrichtung 14a bzw. 14b bzw. 14c kann auch im hydraulischen Stellantrieb 8a bzw. 8b bzw. 8c integriert sein. Im einfachsten Fall bestehen die Blockiervorrichtungen 14a, 14b und 14c aus einfachen oder doppelt wirkenden Sperrventilen. Sie können aber auch als hydraulisch betätigte Klemmelemente auf die Kolbenstangen 10a, 10b und 10c einwirken.

Die Blockiervorrichtung 14a ist über Hydraulikleitungen mit drei Strömungsventilen 15a, 16a und 17a verbunden. Analog ist die Blockiervorrichtung 14b über Hydraulikleitungen mit Strömungsventilen 15b, 16b und 17b und die Blockiervorrichtung 14c über Hydraulikleitungen mit Strömungsventilen 15c, 16c und 17c verbunden. Die Strömungsventile 15a bis 17c werden eingesetzt, um den Gleichlauf während der Bewegung des Trägers 4 des Stromabnehmers 3 nochmals zu verbessern.

Die hydraulische Steilvorrichtung 6 muß insgesamt drei voneinander verschiedene Bewegungen - nämlich Anheben, Absenken oder Schnellabsenkung des Trägers 4 - ausführen können. Demzufolge sind für jeden der drei hydraulischen Stellantriebe 8a, 8b und 8c jeweils drei den Volumenstrom nach Größe und Richtung beeinflussende Strömungsventile 15a, 16a und 17a bzw. 15b, 16b und 17b bzw. 15c, 16c und 17c vorzusehen. Im einfachsten Fall können diese Funktionen jedoch auch in den Hydraulikleitungen 21, 22 und 23 integriert sein. Für mittlere Ansprüche an den Strömungsgleichlauf genügen für die Funktionen der Strömungsventile 15a bis 17c Drosselwiderstände, wohingegen für höchste Ansprüche auch Stromregelventile oder andere volumetrisch dosierende Gleichlaufeinrichtungen eingesetzt werden können.

Die drei hydraulischen Stellantriebe 8a, 8b und 8c sind schließlich mit drei elektro-magnetischen Schaltventilen 18, 19 und 20 verbunden, wobei jedem Schaltventil 18, 19 und 20 ein bestimmter Bewegungsablauf zugeordnet ist. Im dargestellten Ausführungsbeispiel ist dem Schaltventil 18 der Bewegungsablauf "Stromabnehmergestell anheben und absenken" zugeordnet. Das Schaltventil 18 wird dazu über eine Signalleitung 24 angesteuert. Das Schaltventil 19 wird über eine Signalleitung 25 angesteuert und ist für den Bewegungsablauf " Stromabnehmergestell anheben und absenken schnell, Notfall" verantwortlich. Das Schaltventil 20 wird über eine Signalleitung 26 angesteuert und ist für den Bewegungsablauf "Stromabnehmergestell anheben und absenken" verantwortlich.

Die Verbindung der hydraulischen Stellantriebe 8a, 8b und 8c mit den Schaltventilen 18, 19 und 20 erfolgt über Hydraulikleitungen 21, 22 und 23. Die Hydraulikleitung 21 verbindet die Strömungsventile 15a, 15b und 15c miteinander und ist an das Schaltventil 18 geführt. Damit sind die drei hydraulischen Stellantriebe 8a, 8b und 8c mit dem elektro-magnetischen Schaltventil 18 verbunden. Die Hydraulikleitung 22 verbindet die Strömungsventile 16a, 16b und 16c miteinander und ist an das Schaltventil 19 geführt. Damit sind die drei hydraulischen Stellantriebe 8a, 8b und 8c mit dem elektromagnetischen Schaltventil 19 verbunden. Die Hydraulikleitung 23 verbindet die Strömungsventile 17a, 17b und 17c miteinander und ist an das Schaltventil 20 geführt. Damit sind die drei hydraulischen Stellantriebe 8a, 8b und 8c mit dem elektro-magnetischen Schaltventil 20 verbunden.

Durch die Ausführung der Schaltventile 18, 19 und 20 als Zweistellungsventile kann die zweite Schaltstellung für Fail-Save-Funktionen benutzt werden.

Die Schaltventile 18, 19 und 20 sind weiterhin über Hydraulikleitungen 27 und 28 mit einer Energieversorgungseinheit 29 verbunden. In der Energieversorgungseinrichtung 29 ist die Hydraulik-Flüssigkeit unter einem bestimmten Druck bevorratet.

Die Energieversorgungseinrichtung 29 ist im dargestellten Ausführungsbeispiel als Energiewandler ausgebildet, der pneumatische Energie aus dem Druckluftnetz 30 des Eisenbahnfahrzeuges in hydraulische Energie zur Versorgung der hydraulischen Stellantriebe 8a, 8b und 8c umwandelt.

Als Energiewandler können sowohl longitudinal (Zylindersysteme) als auch rotatorisch (Motor-Pumpe) arbeitende Druckübersetzer zum Einsatz kommen. Die Energieversorgung wird zweckmäßigerweise mit geeigneten Speichereinrichtungen ausgestattet, die Hydraulikflüssigkeit sowohl auf hohem Druckniveau (Energiespeicher) als auch auf niedrigem Druckniveau (Behälterfunktion) speichert. Dadurch läßt sich ein geschlossenes hydraulisches System ohne Kontakt der Hydraulikflüssigkeit zur Luft aufbauen. Ein solches geschlossenes System ist erheblich widerstandsfähiger und damit auch langlebiger, da eine Alterung der Hydraulikflüssigkeit durch Kontakt mit dem Luftsauerstoff unterbunden wird.

Der Gesamtzustand des Systems sowie auch einzelne Betriebszustände können durch geeignete Sensoren, die im einzelnen nicht dargestellt sind, überwacht werden.

## Patentansprüche

1. Schienenfahrzeug mit wenigstens einem Wagenkasten (1), auf dessen Dach (2) wenigstens ein Stromabnehmer (3) mit seinem Träger (4) elektrisch isoliert und vom Dach (2) des Wagenkastens (1) beabstandet angeordnet ist, wobei wenigstens ein Stromabnehmer (3) in eine Betriebslage anhebbar und in eine Ruhelage absenkbar ist,
**dadurch gekennzeichnet**,
daß der Träger (4) des Stromabnehmers (3) durch eine Stellvorrichtung (6) in seinem Höhenabstand zum Dach (2) des Wagenkastens (1) derart einstellbar ist, daß bei einem in Ruhelage abgesenkten und elektrisch spannungslosen Stromabnehmer (3) der Höhenabstand (H_{RL}) zwischen dem tiefsten unter elektrischer Spannung stehenden Teil (4) des Stromabnehmers (3) und dem Dach (2) um einen vorgebbaren Differenzwert kleiner ist als die Mindestluftstrecke (L), und daß bei einem in Betriebslage angehobenen und unter elektrischer Spannung stehenden Stromabnehmer (3) der Höhenabstand (H_{BL}) zwischen dem tiefsten unter elektrischer Spannung stehenden Teil (4) des Stromabnehmers (3) und dem Dach (2) zumindest der Mindestluftstrecke (L) entspricht.

2. Schienenfahrzeug nach Anspruch 1,
**dadurch gekennzeichnet**,
daß der Träger (4) des Stromabnehmers (3) elektrisch isoliert auf einer Neigevorrichtung angeordnet ist, die auf dem Dach (2) des Wagenkastens (1) befestigt ist und durch die der Träger (4) des Stromabnehmers (3) entgegen der Neigung des Wagenkastens (1) rückführbar ist, und daß die Stellvorrichtung zur Einstellung des Höhenabstandes auf die Neigevorrichtung wirkt.

3. Schienenfahrzeug nach Anspruch 2,
**dadurch gekennzeichnet**,
daß der Träger des Stromabnehmers (3) als Neigevorrichtung ausgebildet ist.

4. Schienenfahrzeug nach Anspruch 1 oder 2,
**dadurch gekennzeichnet**,
daß die Stellvorrichtung als elektro-mechanische Stellvorrichtung ausgebildet ist, die wenigstens einen elektrischen Stellantrieb umfaßt.

5. Schienenfahrzeug nach Anspruch 1 oder 2,
**dadurch gekennzeichnet**,
daß die Steilvorrichtung als elektro-pneumatische Stellvorrichtung ausgebildet ist, die wenigstens ein elektro-magnetisches Schaltventil und wenigstens einen pneumatischen Stellantrieb umfaßt.

6. Schienenfahrzeug nach Anspruch 1 oder 2,
**dadurch gekennzeichnet**,
daß die Stellvorrichtung (6) als elektro-hydraulische Stellvorrichtung ausgebildet ist, die wenigstens ein elektro-magnetisches Schaltventil (18, 19, 20) und wenigstens einen hydraulischen Stellantrieb (8a, 8b, 8c) umfaßt.

7. Schienenfahrzeug nach Anspruch 1 oder 2,
**dadurch gekennzeichnet**,
daß die Stellvorrichtung als elektro-pneumatisch-hydraulische Stellvorrichtung ausgebildet ist, die wenigstens ein elektro-magnetisches Schaltventil und wenigstens einen pneumatisch-hydraulischen Stellantrieb umfaßt.
